(19) Europäisches Patentamt
European Patent Office
Office européen des brevets

(11) **EP 4 550 779 A1**

(12) **EUROPEAN PATENT APPLICATION**
published in accordance with Art. 153(4) EPC

(43) Date of publication:
**07.05.2025   Bulletin 2025/19**

(21) Application number: **23831906.5**

(22) Date of filing: **28.06.2023**

(51) International Patent Classification (IPC):
**H04N 19/11** *(2014.01)*    **H04N 19/593** *(2014.01)*
**H04N 19/70** *(2014.01)*    **H04N 19/13** *(2014.01)*
**H04N 19/105** *(2014.01)*    **H04N 19/60** *(2014.01)*
**H04N 19/30** *(2014.01)*    **H04N 19/132** *(2014.01)*

(52) Cooperative Patent Classification (CPC):
**H04N 19/105; H04N 19/11; H04N 19/13;**
**H04N 19/132; H04N 19/30; H04N 19/593;**
**H04N 19/60; H04N 19/70**

(86) International application number:
**PCT/KR2023/009054**

(87) International publication number:
**WO 2024/005547 (04.01.2024 Gazette 2024/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **29.06.2022   KR 20220079702**

(71) Applicant: **LG Electronics Inc.**
**Yeongdeungpo-gu**
**Seoul 07336 (KR)**

(72) Inventors:
• **HONG, Myungoh**
  **Seoul 06772 (KR)**
• **YOO, Sunmi**
  **Seoul 06772 (KR)**
• **LIM, Jaehyun**
  **Seoul 06772 (KR)**
• **NAM, Jung Hak**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **ISP MODE-BASED IMAGE ENCODING/DECODING METHOD AND DEVICE, AND RECORDING MEDIUM FOR STORING BITSTREAM**

(57)    An image encoding/decoding method and apparatus are provided. The image decoding method may comprise partitioning a current block into a plurality of subblocks based on intra sub-partitions (ISP) prediction being applied to the current block, determining an intra prediction mode of each of the plurality of subblocks, and generating a prediction block of each of the plurality of subblocks based on the determined intra prediction mode. The plurality of subblocks may include a first subblock and a second subblock, an intra prediction mode of the first subblock may be determined based on prediction mode information of the first subblock or a first neighboring reference sample of the first subblock, and an intra prediction mode of the second subblock may be determined based on a second neighboring reference sample of the second subblock.

FIG. 17

```
            START
              │
              ▼                          S1710
┌─────────────────────────────────────┐
│ PARTITION CURRENT BLOCK INTO PLURALITY│
│  OF SUBBLOCKS BASED ON ISP PREDICTION │
│   BEING APPLIED TO CURRENT BLOCK      │
└─────────────────────────────────────┘
              │                          S1720
              ▼
┌─────────────────────────────────────┐
│      DETERMINE INTRA PREDICTION       │
│        MODE OF EACH SUBBLOCK          │
└─────────────────────────────────────┘
              │                          S1730
              ▼
┌─────────────────────────────────────┐
│    GENERATE PREDICTION BLOCK OF       │
│  EACH SUBBLOCK BASED ON DETERMINED    │
│       INTRA PREDICTION MODE           │
└─────────────────────────────────────┘
              │
              ▼
             END
```

## Description

## Technical Field

The present disclosure relates to an image encoding/decoding method and apparatus and a recording medium storing a bitstream and, more particularly, to an image encoding/decoding method and apparatus based on an ISP mode and a recording medium storing a bitstream generated by the image encoding method/apparatus of the present disclosure.

## Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

## Disclosure

## Technical Problem

An object of the present disclosure is to provide an image encoding/decoding method and apparatus with improved encoding/decoding efficiency.

In addition, an object of the present disclosure is to provide an image encoding/decoding method and apparatus based on an ISP mode.

In addition, an object of the present disclosure is to provide an image encoding/decoding method and apparatus that performs intra prediction based on a prediction mode determined for each subblock in an ISP mode.

In addition, an object of the present disclosure is to provide a non-transitory computer-readable recording medium storing a bitstream generated by an image encoding method or apparatus according to the present disclosure.

In addition, an object of the present disclosure is to provide a non-transitory computer-readable recording medium storing a bitstream received, decoded and used to reconstruct an image by an image decoding apparatus according to the present disclosure.

In addition, an object of the present disclosure is to provide a method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

## Technical Solution

The image decoding method according to an aspect of the present disclosure may comprise partitioning a current block into a plurality of subblocks based on intra sub-partitions (ISP) prediction being applied to the current block, determining an intra prediction mode of each of the plurality of subblocks, and generating a prediction block of each of the plurality of subblocks based on the determined intra prediction mode. The plurality of subblocks may include a first subblock and a second subblock, an intra prediction mode of the first subblock may be determined based on prediction mode information of the first subblock or a first neighboring reference sample of the first subblock, and an intra prediction mode of the second subblock may be determined based on a second neighboring reference sample of the second subblock.

An image decoding apparatus according to another aspect of the present disclosure may comprise a memory and at least one processor. The at least one processor may partition a current block into a plurality of subblocks based on intra sub-partitions (ISP) prediction being applied to the current block, determine an intra prediction mode of each of the plurality of subblocks, and generate a prediction block of each of the plurality of subblocks based on the determined intra prediction mode. The plurality of subblocks may include a first subblock and a second subblock, an intra prediction mode of the first subblock may be determined based on prediction mode information of the first subblock or a first neighboring reference sample of the first subblock, and an intra prediction mode of the second subblock may be determined based on a second neighboring reference sample of the second subblock.

An image encoding method according to another aspect of the present disclosure may comprise partitioning a current block into a plurality of subblocks based on intra sub-partitions (ISP) prediction being applied to the current block, determining an intra prediction mode of each of the plurality of subblocks, and generating a prediction block of each of the plurality of subblocks based on the determined intra prediction mode. The plurality of subblocks may include a first subblock and a second subblock, and only information on an intra prediction mode of the first subblock among the first subblock and the second subblock may be encoded in a bitstream.

A computer-readable recording medium according to another aspect of the present disclosure can store a bitstream generated by the image encoding method or the image encoding apparatus of the present disclosure.

A transmission method according to another aspect of the present disclosure may transmit a bitstream generated by the image encoding method or the image encoding apparatus of the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

Also, according to the present disclosure, it is possible to provide an image encoding/decoding method and apparatus based on an ISP mode.

Also, according to the present disclosure, it is possible to provide an image encoding/decoding method and apparatus that performs intra prediction based on a prediction mode determined for each subblock in an ISP mode.

Also, according to the present disclosure, it is possible to provide a non-transitory computer-readable recording medium storing a bitstream generated by an image encoding method or apparatus according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 shows a picture partitioning example.

FIGS. 5a and 5b show examples of subblock partitioning in an ISP mode.

FIG. 6 shows an example of HoG construction.

FIG. 7 is a view for explaining a HoG-based blending mode.

FIGS. 8 to 10 are views showing an example of an ISP partitioning mode.

FIG. 11 and FIG. 12 are views for explaining an ISP mode according to an embodiment of the present disclosure.

FIG. 13 is a view for explaining an ISP mode according to an embodiment of the present disclosure.

FIG. 14 is a view showing a reference area that may be used in an ISP mode according to an embodiment of the present disclosure.

FIG. 15 is a view for explaining an ISP mode according to an embodiment of the present disclosure.

FIG. 16 is a flowchart illustrating an image encoding method according to an embodiment of the present disclosure.

FIG. 17 is a flowchart illustrating an image decoding method according to an embodiment of the present disclosure.

FIG. 18 is a view showing a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "video" may mean a set of images over time.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "only A," "only B," "only C," or "any and all combinations of A, B, and C." In addition, "at least one A, B or C" or "at least one A, B and/or C" may mean "at least one A, B and C."

Parentheses used in the present disclosure may mean "for example." For example, if "prediction (intra prediction)" is indicated, "intra prediction" may be proposed as an example of "prediction." In other words, "prediction" in the present disclosure is not limited to "intra prediction," and "intra prediction" may be proposed as an example of "prediction." In addition, even when "prediction (i.e., intra prediction)" is indicated, "intra prediction" may be proposed as an example of "prediction."

## Overview of video coding system

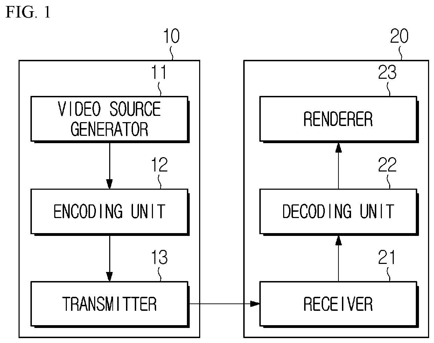

FIG. 1 is a view schematically showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoder 12 and a transmitter 13. The decoding device 20 according to an embodiment may include a receiver 21, a decoder 22 and a renderer 23. The encoder 12 may be called a video/image encoding apparatus, and the decoder 22 may be called a video/image decoding apparatus. The transmitter 13 may be included in the encoder 12. The receiver 21 may be included in the decoder 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoder 12 may encode an input video/image. The encoder 12 may perform a series of procedures such as prediction, transform, and quantization for compression and coding efficiency. The encoder 12 may output encoded data (encoded video/image information) in the form of a bitstream.

The transmitter 13 may transmit the encoded video/image information or data output in the form of a bitstream to the receiver 21 of the decoding device 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a separate transmission device from the encoder 120. In this case, the transmission device includes at least one processor that acquires encoded video/image information or data output in the form of a bitstream and a transmitter that delivers it in the form of a file or streaming. The receiver 21 may extract/receive the bitstream from the storage medium or network and transmit the bitstream to the decoder 22.

The decoder 22 may decode the video/image by performing a series of procedures such as dequantization, inverse transform, and prediction corresponding to the operation of the encoder 12.

The renderer 23 may render the decoded video/image. The rendered video/image may be displayed through the display.

## Overview of image encoding apparatus

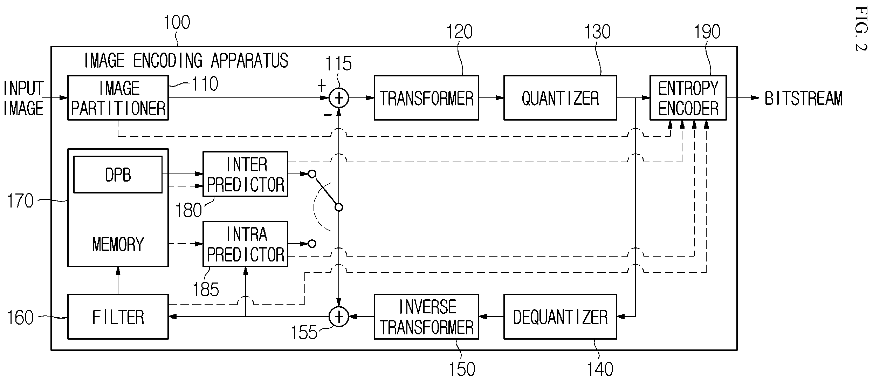

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, as described below, luma mapping with chroma scaling (LMCS) is applicable in a picture encoding process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

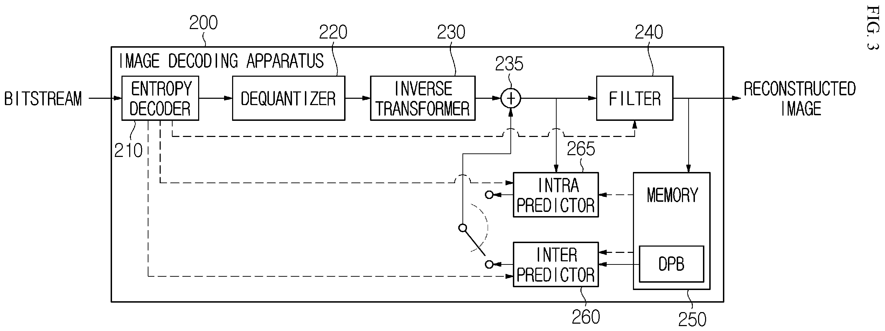

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 250 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

## Overview of image partitioning

A video/image coding method according to the present disclosure may be performed based on a partitioning structure of an image described below. Specifically, the above-described processes of prediction, residual processing ((inverse) transform, (de)quantization, etc.), syntax element coding and filtering may be performed based on a CTU or CU (and/or TU, PU) derived based on the partitioning structure of the image. An image may be partitioned into a block unit, and a block partitioning procedure may be performed in the image partitioner 110 of the above-described image encoding apparatus 100. Partitioning-related information may be encoded in the entropy encoder 190 and be delivered to the image decoding apparatus 200 in a bitstream form. The entropy decoder 210 of the image decoding apparatus 200 may derive a block partitioning structure of a current picture based on the partitioning-related information acquired from the bitstream and perform a series of procedures for image decoding (e.g., prediction, residual processing, block/picture reconstruction, in-loop filtering, etc.) based on the block partitioning structure. According to the present disclosure, a CU size and a TU size may be equal to each other. Alternatively, a plurality of TUs may be present in a CU region. Meanwhile, a CU size may generally represent a luma component (sample) CB size. A TU size may generally represent a luma component (sample) TB size. A chroma component (sample) CB or TB size may be derived based on a luma component (sample) CB or TB size according to a component proportion according to a color format (chroma format, e.g., 4:4:4, 4:2:2, 4:2:0) of a picture/-image. The TU size may be derived based on maxTbSize. For example, when the CU size is greater than the maxTbSize, a plurality of TUs (TBs) of the maxTbSize may be derived from the CU, and transform/inverse transform may be performed in the TU (TB) unit. In addition, for example, when intra prediction is applied, an intra prediction mode/type may be derived in the CU (or CB) unit, and a procedure of deriving a neighbor reference sample and generating a prediction sample may be performed in a TU (or TB) unit. In this case, one TU (or TB) or a plurality of TUs (or TBs) may be present in one CU (or CB) region, and in this case, the plurality of TUs (or TBs) may share a same intra prediction mode/type.

In addition, in video/image coding according to the present disclosure, an image processing unit may have a hierarchical structure. One picture may be divided into one or more tiles, bricks, slices and/or tile groups. One slice may include one or more bricks. One brick may include one or more CTU rows in a tile. A slice may include an integer number of bricks. One tile group may include one or more tiles. One tile may include one or more CTUs. The CTU may be partitioned into one or more CUs. A tile is a rectangular region of CTUs within a particular tile column and a particular tile row in a picture. A tile group may include an integer number of tiles according to tile raster scan in a picture. A slice header may carry information/parameter applicable to a corresponding slice (blocks in the slice). In case the image encoding apparatus 100/image decoding apparatus 200 has a multi-core processor, an encoding/decoding procedure for the tile, slice, brick and/or tile group may be parallel processed. In this document, a slice or a tile group may be used interchangeably. That is, a tile group header may be referred to as a slice header. Herein, a slice may have one type of slice types including intra (I) slice, predictive (P) slice, and bi-predictive (B) slice. For blocks in an I slice, inter prediction is not used for prediction, and only intra prediction may be used. Of course, in this case, an original sample value may be coded without prediction and be signaled. For blocks in a P slice, intra prediction or inter prediction may be used, and when inter prediction is used, only uni-prediction may be used. Meanwhile, for blocks in a B slice, intra prediction or inter prediction may be used, and when inter prediction is used, bi-prediction may also be used.

In the encoding apparatus, a tile/tile group, a brick, a slice, and a maximum and minimum coding unit size may be determined according to a feature (e.g., resolution) of a video or by considering efficiency of coding or parallel processing, and information on it or information capable of deriving it may be included in a bitstream.

In the decoding apparatus, it is possible to acquire information indicating whether a CTU in a tile/tile group, a brick, a slice and a tile of a current picture is partitioned into a plurality of coding units. Efficiency may be improved if such information is set to be acquired (transmitted) under a specific condition.

The slice header (slice header syntax) may include information/parameter that is commonly applicable to the slice. An APS (APS syntax) or a PPS (PPS syntax) may include information/parameter that is commonly applicable to one or more pictures. The SPS (SPS syntax) may include information/parameter that is commonly applicable to one or more sequences. The VPS (VPS syntax) may include information/parameter that is commonly applicable to multiple layers. The DPS (DPS syntax) may include information/parameter that is commonly applicable to an overall video. The DPS may include information/parameter related to concatenation of a coded video sequence (CVS).

In the present disclosure, an upper level syntax may include at least one of the APS syntax, the PPS syntax, the SPS syntax, the VPS syntax, the DPS syntax, and the slice header syntax. In addition, for example, information on partitioning and configuration of the tile/tile group/brick/slice may be configured in the image encoding apparatus 100 through the upper level syntax and be delivered to the image decoding apparatus 200 in a bitstream form.

**Partitioning structure**

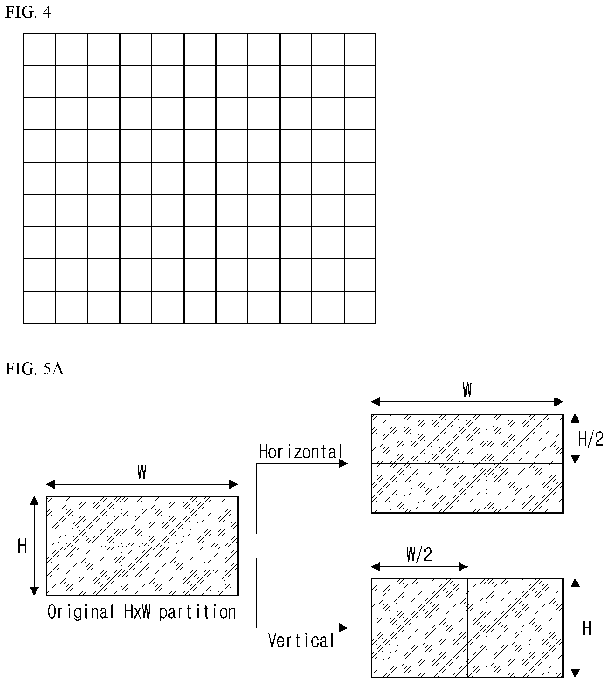

Pictures may be partitioned into a sequence of coding tree units (CTUs). A CTU may correspond to a coding tree block (CTB). Alternatively, the CTU may include a coding tree block of luma samples and two coding tree blocks of chroma samples corresponding thereto. For example, for a picture containing three sample arrays, the CTU may include an NxN block of luma samples and two corresponding blocks of chroma samples. FIG. 4 shows an example in which one picture is partitioned into multiple CTUs.

The maximum allowable size of the CTU for coding and prediction may be different from the maximum allowable size of the CTU for transform. For example, even if the maximum allowable size of the CTU for transform is 64x64, the maximum allowable size of the luma block in the CTU for coding and prediction may be 128x128.

In addition, the picture may be partitioned into one or more tile rows and one or more tile columns. The tile may be a sequence of CTUs covering a rectangular area of the picture. The CTUs of the tile may be scanned in raster scan order within the tile.

The slice may consist of an integer number of complete tiles or an integer number of contiguous complete CTU rows within a tile of a picture. Two modes of slices may be supported: one is a raster scan slice mode and the other is a rectangular slice mode.

In the raster scan slice mode, a slice may include a sequence of complete tiles in a tile raster scan of a picture. In the present disclosure, a slice according to the raster scan slice mode may be referred to as a raster scan slice.

In the rectangular slice mode, a slice may include several complete tiles that collectively form a rectangular area of a picture or several contiguous complete CTU rows of one tile that collectively form a rectangular area of a picture. In the present disclosure, a slice according to the rectangular slice mode may be referred to as a rectangular slice. The tiles included in a rectangular slice may be scanned in tile raster scan order within a rectangular area corresponding to the slice.

Meanwhile, one or more slices may constitute a subpicture. That is, a subpicture may include one or more slices that collectively cover a rectangular area of a picture.

## Overview of intra prediction

Intra prediction may represent prediction for generating prediction samples for a current block based on reference samples in a picture to which a current block belongs (a current picture). When intra prediction is applied to a current block, neighboring reference samples to be used for intra prediction of the current block may be derived. The neighboring reference samples of the current block may include a total of 2xnh samples adjacent to a left boundary of the current block having a size of nWxnH and samples adjacent to a bottom-left, a total of 2xnW samples adjacent to a top boundary of the current block and samples adjacent to a top-right, and one sample adjacent to a top-left of the current block. Alternatively, the neighboring reference samples of the current block may include a plurality of columns of top neighboring samples and a plurality of rows of left neighboring samples. In addition, the neighboring reference samples of the current block may include a total of nH samples adjacent to a right boundary of the current block having a size of nWxnH, a total of nW samples adjacent to a bottom boundary of the current block and one sample adjacent to a bottom-right of the current block.

However, some of the neighboring reference samples of the current block have not yet been decoded or may not be available. In this case, the image decoding apparatus 200 may construct neighboring reference samples to be used for prediction by substituting unavailable samples with available samples. Alternatively, neighboring reference samples to be used for prediction may be constructed through interpolation of available samples.

When the neighboring reference samples are derived, (i) a prediction sample may be derived based on an average or interpolation of neighboring reference samples of the current block, and (ii) the prediction sample may be derived based on a reference sample present in a specific (prediction) direction with respect to the prediction sample among the neighboring reference samples of the current block. The case of (i) may be called a non-directional mode or a non-angular mode, and the case of (ii) may be called a directional mode or an angular mode. Also, the prediction sample may be generated through interpolation of the second neighboring sample and the first neighboring sample positioned in the opposite direction of the prediction direction of the intra prediction mode of the current block based on the prediction sample of the current block among the neighboring reference samples. The above-described case may be referred to as linear interpolation intra prediction (LIP). In addition, chroma prediction samples may be generated based on luma samples using a linear model. This case may be called an LM mode. In addition, a temporary prediction sample of the current block may be derived based on the filtered neighboring reference samples, and the prediction sample of the current block may be derived by a weighted sum of at least one reference sample derived according to the intra prediction mode among the existing neighboring reference samples, that is, unfiltered neighboring reference samples, and the temporary prediction sample. The above-described case may be referred to as position dependent intra prediction (PDPC). In addition, a reference sample line with the highest prediction accuracy is selected from among multiple neighboring reference sample lines of the current block to derive the prediction sample using the reference sample located in the prediction direction in the corresponding line, and, at this time, intra prediction encoding may be performed by indicating (signaling) the used reference sample line to the image decoding apparatus 200. The above-described case may be referred to as multi-reference line (MRL) intra prediction or MRL-based intra prediction. In addition, intra prediction is performed based on the same intra prediction mode by partitioning the current block into vertical or horizontal sub-partitions, and neighboring reference samples may be derived and used in units of the sub-partitions. That is, in this case, the intra prediction mode for the current block is equally applied to the sub-partitions, but the intra prediction performance may be improved in some cases by deriving and using neighboring reference samples in units of sub-partitions. This prediction method may be called intra sub-partitions (ISP) or ISP-based intra prediction. The above-described intra prediction methods may be called an intra prediction type. The intra prediction type may be called various terms such as intra prediction technique or additional intra prediction mode. For example, the intra prediction type (or additional intra prediction mode, etc.) may include at least one of the aforementioned LIP, PDPC, MRL or ISP. A general intra prediction method excluding a specific intra prediction type such as LIP, LM, PDPC, MRL, and ISP may be referred to as a normal intra prediction type. The normal intra prediction type may be generally applied when the above specific intra prediction type is not applied, and prediction may be performed based on the above-described intra prediction mode. Meanwhile, if necessary, post-processing filtering may be performed on the derived prediction sample.

Specifically, the intra prediction procedure may include an intra prediction mode/type determination step, a neighboring reference sample derivation step, and an intra prediction mode/type based prediction sample derivation step. In addition, if necessary, a post-filtering step may be performed on the derived prediction sample.

Meanwhile, in addition to the above-described intra prediction types, affine linear weighted intra prediction (ALWIP) may be used. The ALWIP may be referred to as linear weighted intra prediction (LWIP) or matrix weighted intra prediction or matrix based intra prediction (MIP). If the MIP is applied to the current block, i) neighboring reference samples on which an averaging procedure has been performed is used, ii) matrix-vector-multiplication procedure is performed, and iii) a horizontal/vertical interpolation procedure is further performed to derive prediction samples for the current block as necessary. The intra prediction modes used for the MIP may be configured to be different from the intra prediction modes used in the LIP, PDPC, MRL, ISP intra prediction or normal intra prediction. The intra prediction mode for the MIP may be called a MIP intra prediction mode, a MIP prediction mode, or a MIP mode. For example, a matrix and offset used in the matrix vector multiplication may be set differently according to the intra prediction mode for the MIP. Here, the matrix may be called a (MIP) weighting matrix, and the offset may be called a (MIP) offset vector or a (MIP) bias vector.

### Overview of MPM mode

In general, when an image is divided into blocks, a current block to be coded and the neighboring blocks have similar image characteristics. Therefore, the current block and the neighboring blocks have a high probability of having the same or similar intra prediction mode. Therefore, an encoder may use the intra prediction mode of the neighboring blocks to encode the intra prediction mode of the current block.

For example, the encoder/decoder may construct an MPM (most probable mode) list for the current block. The MPM list may also be expressed as an MPM candidate list. Here, the MPM may mean a mode used to improve coding efficiency by considering the similarity between the current block and neighboring blocks during intra prediction mode coding. As described above, the MPM list may be constructed to include the planar mode, or may be constructed to exclude the planar mode. For example, if the MPM list includes the planar mode, the number of candidates in the MPM list may be 6. In addition, if the MPM list does not include the planar mode, the number of candidates in the MPM list may be 5.

The encoder/decoder can construct an MPM list containing 6 MPMs.

The following types of modes may be considered to construct the MPM list.

- Default intra modes
- Neighbour intra modes
- Intra modes derived from neighbour inter modes
- Decoder-side intra mode derivation (DIMD) modes
- Derived intra modes

For the neighbour intra modes, neighbour blocks, i.e., left neighbour block, upper neighbour block, lower left neighbour block, upper right neighbour block, upper left neighbour block, etc., may be considered. When utilizing the neighbour intra mode as MPM, the input order may vary depending on the size information of the current block. For example, when the height of the block is greater than or equal to the width of the block, the intra mode of the upper neighbour block may be considered first, and then the intra mode of the left neighbour block may be considered.

Even when the neighbour blocks are coded in the inter mode rather than the intra mode, intra mode information may be obtained by an IPM buffer. If the position pointed to by the motion vector of the neighboring inter block is the intra mode, the intra mode may be stored in the IPM buffer. The intra mode stored in the IPM buffer may be used as the MPM mode of the neighboring block.

The MPM candidate may be constructed from the DIMD described in 1.4.10. If the current block is not in the DIMD mode, the intra mode derived from the DIMD may be used as the MPM candidate.

As described above, if the MPM list constructed not to include the planar mode, the planar mode is excluded from the list, and the number of MPM list candidates may be set to 5.

The above-described MPM list construction method may be used when MIP is not applied to the current block. For example, the above-described MPM list construction method may be used to derive an intra prediction mode used in LIP, PDPC, MRL, ISP intra prediction, or normal intra prediction. Meanwhile, the left neighbour block or the upper neighbour block may be coded based on the above-described MIP. That is, MIP may be applied when coding the left neighbour block or the upper neighbour block. In this case, it is not appropriate to use the MIP intra prediction mode number of the neighbour block (left neighbour block/upper neighbour block) to which MIP is applied as it is in the MPM list for the current block to which MIP is not applied. Therefore, in this case, as an example, the intra prediction mode of the neighbour block (left neighbour block/upper neighbour block) to which MIP is applied may be considered to be DC or planar mode. As another example, the intra prediction mode of the neighbour block (left neighbour block/upper neighbour block) to which MIP is applied may be mapped to the normal intra prediction mode based on the mapping table and used to construct the MPM list. In this case, the mapping may be performed based on the block size type of the current block. For example, the mapping table may be expressed as follows.

[Table 1]

| MIPIP IntraPredMode[ xNbX ][ yNbX ] | block size type MipSizeId | | |
|---|---|---|---|
| | **0** | **1** | **2** |
| 0 | 0 | 0 | 1 |
| 1 | 18 | 1 | 1 |
| 2 | 18 | 0 | 1 |
| 3 | 0 | 1 | 1 |
| 4 | 18 | 0 | 18 |
| 5 | 0 | 22 | 0 |
| 6 | 12 | 18 | 1 |
| 7 | 0 | 18 | 0 |
| 8 | 18 | 1 | 1 |
| 9 | 2 | 0 | 50 |
| 10 | 18 | 1 | 0 |
| 11 | 12 | 0 | |
| 12 | 18 | 1 | |
| 13 | 18 | 0 | |
| 14 | 1 | 44 | |
| 15 | 18 | 0 | |
| 16 | 18 | 50 | |
| 17 | 0 | 1 | |
| 18 | 0 | 0 | |
| 19 | 50 | | |
| 20 | 0 | | |
| 21 | 50 | | |
| 22 | 0 | | |
| 23 | 56 | | |
| 24 | 0 | | |
| 25 | 50 | | |
| 26 | 66 | | |
| 27 | 50 | | |
| 28 | 56 | | |
| 29 | 50 | | |
| 30 | 50 | | |
| 31 | 1 | | |
| 32 | 50 | | |
| 33 | 50 | | |

(continued)

| MIPIP IntraPredMode[ xNbX ][ yNbX ] | block size type MipSizeId | | |
|---|---|---|---|
| | 0 | 1 | 2 |
| 34 | 50 | | |

Here, MIP IntraPredMode[ xNbX ][ yNbX ] represents the MIP intra prediction mode of the neighbour blocks (left neighbour block/upper neighbour block), and the block size type MipSizeId represents the block size type of the neighbour blocks or the current block. The numbers under the block size type values 0, 1, and 2 represent the normal intra prediction modes to which the MIP intra prediction mode is mapped, for each block size type.

For example, if the block size type of the current block is 0 and the MIP intra prediction mode number of the neighbour block is 10, the mapped normal intra prediction mode number may be 18.

However, the mapping relationship is an example and may be changed.

Meanwhile, if MIP is applied to the current block, a separate MPM list for the current block to which the MIP is applied may be constructed. The MPM list may be called by various names, such as MIP MPM list (or MPM list for MIP, candMipModeList), to distinguish it from the MPM list for cases where MIP is not applied to the current block. Hereinafter, it is expressed as MIP MPM list for the sake of distinction, but it may be called MPM list.

The MIP MPM list may include n candidates, for example, n may be 3. The MIP MPM list may be constructed based on a left neighbour block and an upper neighbour block of the current block. Here, the left neighbour block may represent a block located at the uppermost position among the neighbour blocks adjacent to the left boundary of the current block. In addition, the upper neighbour block may represent a block located at the leftmost position among the neighbour blocks adjacent to the upper boundary of the current block.

For example, when MIP is applied to the left neighbour block (and the block size type of the left neighbour block is the same as the block size type of the current block), the first candidate intra prediction mode (or candMipModeA) may be set to be the same as the MIP intra prediction mode of the left neighbour block. In addition, for example, when MIP is applied to the upper neighbour block (and the block size type of the upper neighbour block is the same as the block size type of the current block), the second candidate intra prediction mode (or cand-ipModeB) may be set to be the same as the MIP intra prediction mode of the upper neighbour block. Meanwhile, the left neighbour block or the upper neighbour block may be coded based on intra prediction other than MIP. That is, an intra prediction type other than MIP may be applied when coding the left neighbour block or the upper neighbour block. In this case, it is not appropriate to use the normal intra prediction mode number of the neighbour block (left neighbour block/upper neighbour block) to which MIP is not applied as it is as a candidate intra mode for the current block to which MIP is applied. Therefore, in this case, as an example, the MIP intra prediction mode of the neighbour block (left neighbour block/upper neighbour block) to which MIP is not applied may be regarded as a MIP intra prediction mode of a specific value (ex. 0, 1 or 2, etc.). As another example, the normal intra prediction mode of the neighbour block (left neighbour block/upper neighbourblock) to which MIP is not applied may be mapped to the MIP intra prediction mode based on a mapping table and used to construct a MIP MPM list. In this case, the mapping may be performed based on the block size type of the current block. For example, the mapping table may be expressed as follows.

[Table 2]

| IntraPredModeY[ xNbX ][ yNbX ] | block size type MipSizeId | | |
|---|---|---|---|
| | 0 | 1 | 2 |
| 0 | 17 | 0 | 5 |
| 1 | 17 | 0 | 1 |
| 2, 3 | 17 | 10 | 3 |
| 4, 5 | 9 | 10 | 3 |
| 6,7 | 9 | 10 | 3 |
| 8, 9 | 9 | 10 | 3 |
| 10, 11 | 9 | 10 | 0 |
| 12, 13 | 17 | 4 | 0 |
| 14, 15 | 17 | 6 | 0 |
| 16, 17 | 17 | 7 | 4 |

(continued)

| IntraPredModeY[ xNbX ][ yNbX ] | block size type MipSizeId | | |
|---|---|---|---|
| | 0 | 1 | 2 |
| 18, 19 | 17 | 7 | 4 |
| 20, 21 | 17 | 7 | 4 |
| 22, 23 | 17 | 5 | 5 |
| 24, 25 | 17 | 5 | 1 |
| 26, 27 | 5 | 0 | 1 |
| 28, 29 | 5 | 0 | 1 |
| 30, 31 | 5 | 3 | 1 |
| 32, 33 | 5 | 3 | 1 |
| 34, 35 | 34 | 12 | 6 |
| 36, 37 | 22 | 12 | 6 |
| 38, 39 | 22 | 12 | 6 |
| 40, 41 | 22 | 12 | 6 |
| 42, 43 | 22 | 14 | 6 |
| 44, 45 | 34 | 14 | 10 |
| 46, 47 | 34 | 14 | 10 |
| 48, 49 | 34 | 16 | 9 |
| 50, 51 | 34 | 16 | 9 |
| 52, 53 | 34 | 16 | 9 |
| 54, 55 | 34 | 15 | 9 |
| 56, 57 | 34 | 13 | 9 |
| 58, 59 | 26 | 1 | 8 |
| 60, 61 | 26 | 1 | 8 |
| 62, 63 | 26 | 1 | 8 |
| 64, 65 | 26 | 1 | 8 |
| 66 | 26 | 1 | 8 |

Here, IntraPredModeY[ xNbX ][ yNbX ] represents the intra prediction mode of the neighbour block (left neighbour block/upper neighbour block). Here, the intra prediction mode of the neighbour block may be an intra prediction mode for the luma component (sample), i.e., a luma intra prediction mode. The block size type MipSizeId represents the block size type of the neighbour block or the current block. The numbers under the block size type values 0, 1, and 2 represent the MIP intra prediction mode to which the normal intra prediction mode is mapped, for each block size type.

In addition, the above-described neighbour blocks (e.g., left neighbour block/upper neighbour block) may not be available (e.g., located outside the current picture, located outside the current tile/slice, etc.), or a MIP intra prediction mode that is not available to the current block may be used depending on the block size type even if MIP is applied. In this case, a specific MIP intra prediction mode predefined for a first candidate and/or a second candidate may be used as a first candidate intra prediction mode or a second candidate intra prediction mode. In addition, a specific MIP intra prediction mode predefined for a third candidate may be used as a third candidate intra prediction mode.

For example, the predefined specific MIP intra prediction modes may be represented as in the following table. The predefined specific MIP intra prediction modes may be called MIP default candidate modes.

[Table 3]

| Candidate | block size type MipSizeId | | |
|---|---|---|---|
| | 0 | 1 | 2 |
| first candidate intra prediction mode or **candMipModeList[ 0 ]** | 17 | 34 | 5 |
| second candidate intra prediction mode or **candMipModeList[ 1 ]** | 0 | 7 | 16 |
| third candidate intra prediction mode or **candMipModeList[ 2 ]** | 1 | 4 | 6 |

The MIP MPM list may be constructed based on the first candidate intra prediction mode and the second candidate intra prediction mode. For example, when the first candidate intra prediction mode and the second candidate intra prediction mode are different from each other, the first candidate intra prediction mode may be placed as the 0-th candidate (ex. candMipModeList[0]) of the MIP MPM list, and the second candidate intra prediction mode may be placed as the first candidate (ex. candMipModeList[1]) of the MIP MPM list. The second candidate (ex. candMipModeList[2]) of the MIP MPM list may use the above-described predefined specific MIP intra prediction mode.

Alternatively, when the first candidate intra prediction mode and the second candidate intra prediction mode are the same, one of the first candidate intra prediction mode and the second candidate intra prediction mode may be placed as the 0-th candidate (ex. candMipModeList[0]) of the MIP MPM list, and the first candidate (ex. candMipModeList[1]) of the MIP MPM list and the second candidate (ex. candMipModeList[2]) of the MIP MPM list may use the above-described predefined specific MIP intra prediction modes.

As described above, the MIP intra prediction mode of the current block may be derived based on the MIP MPM list. In this case, the MPM flag that may be included in the intra prediction mode information for the MIP as described above may be called intra_mip_mpm_flag, the MPM index may be called intra_mip_mpm_idx, and the remaining intra prediction mode information may be called intra_mip_mpm_remainder.

**Template based intra mode derivation (TIMD)**

For the IPM intra modes of the adj acent intra blocks and inter blocks in the surrounding, a sum of absolute transformed difference (SATD) between a prediction block predicted from a template region and an actual restored sample may be calculated, and the mode with the lowest SATD may be selected as the intra mode of the current block.

Alternatively, after selecting two modes with the lowest SATD, the prediction blocks for the two prediction modes may be blended using a weighted sum method and used as the prediction block of the current block.

The method of blending the two modes may be applied when the condition of Equation 1 below is satisfied.

$$[\text{Equation 1}]$$
$$costMode2 < 2 * costMode1$$

If the condition is satisfied, the two modes are blended to generate a prediction block, otherwise, only one mode with the minimum SATD value may be selected. A weight ratio when blending two prediction blocks is as shown in Equation 2 below.

$$[\text{Equation 2}]$$
$$weight1 = costMode2/(costMode1 + costMode2)$$
$$weight2 = 1 - weight1$$

**Overview of Intra Sub-Partitions (ISP) prediction**

In conventional intra prediction, a block to be currently encoded was regarded as a single coding unit and encoding was performed without partition. However, in the Intra Sub-Partitions (ISP) prediction method, the block to be currently encoded is partitioned in the horizontal or vertical direction and intra prediction encoding is performed. At this time, encoding/decoding is performed on the partitioned block units to generate a reconstructed block, and the reconstructed block is used as a reference block for the next partitioned block. In the current Intra Sub-Partitions (ISP), partitioning is performed according to the block size as shown in Table 4.

[Table 4]

| Block size (CU) | number of partitions |
|---|---|
| 4x4 | not available |
| 4x8, 8x4 | 2 |
| In all other cases | 4 |

The ISP tool partitions luma intra-predicted blocks into 2 or 4 sub-partitions vertically or horizontally, depending on the block size. The minimum block size for ISP may be, for example, 4x8 (or 8x4). If the block size is larger than 4x8 (or 8x4), the corresponding block is partitioned into 4 sub-partitions. M×128 (with M ≤ 64) and 128×N (with N ≤ 64) ISP blocks may cause potential problems in 64×64 VDPUs. For example, an M×128 CU in the single-tree case has a M×128 luma TB and two corresponding M/2×64 chroma TBs. When a CU uses ISP, the luma TB is partitioned into four M×32 TBs (horizontal partition only), each of which is smaller than a 64×64 block. However, in the current ISP design, chroma blocks are not partitioned. Therefore, the two chroma components will have a size larger than 32×32 blocks. A similar situation may also occur with a 128×N CU using ISP. The two cases raise issues for the 64×64 decoder pipeline. Therefore, the CU size that may use ISP may be limited to a maximum of 64×64.

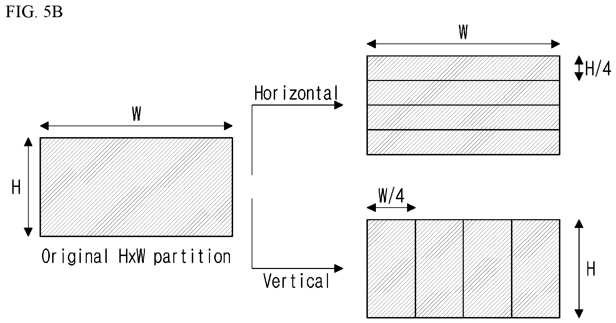

Next, FIG. 5a and FIG. 5b show examples of partitioning of intra sub-partitions (Intra Sub-Partitions coding mode (ISP)). Specifically, FIG. 5a shows examples of partitioning of 4x8 and 8x4 blocks, and FIG. 5b shows examples of partitioning of all blocks except 4x8, 8x4, and 4x4 blocks.

In the intra sub-partition method, an MPM list is generated according to each partitioning method (horizontal partitioning and vertical partitioning) to reduce encoding complexity, and appropriate prediction modes among the prediction modes in the generated MPM list are compared in terms of rate distortion optimization (RDO) to generate an optimal mode. In addition, the intra sub-partition method described above cannot be used when the multiple reference line (MRL) intra prediction is used. That is, the intra sub-partition method is applied only when the 0-th reference line is used (i.e., the intra_luma_ref_idx value is 0). In addition, the PDPC described above cannot be used when the intra sub-partition method described above is used.

In the intra sub-partition method, whether intra sub-partition is applied or not is transmitted first on a block-by-block basis, and if the current block uses intra sub-partition (intra_subpartitions_mode_flag), information (intra_subpartitions_split_flag) on whether it is horizontal or vertical partition is encoded/decoded.

When the intra sub-partition method is applied, the intra prediction mode for the current block is applied equally to the sub-partitions, and the intra prediction performance can be improved by deriving and using neighboring reference samples in units of the sub-partitions. That is, when the intra sub-partition method is applied, the residual sample processing procedure is performed in units of sub-partitions. In other words, intra prediction samples are derived for each sub-partition, and residual signals (residual samples) for the corresponding sub-partition are added thereto to obtain reconstructed samples. The residual signals (residual samples) may be derived through an inverse quantization/inverse transform procedure, etc. based on the residual information (quantized transform coefficient information or residual coding syntax) in the bitstream described above. That is, prediction samples for a first sub-partition and residual samples are derived, and reconstructed samples for the first sub-partition may be derived based on the same. In this case, when deriving prediction samples for a second sub-partition, some of the reconstructed samples in the first sub-partition (e.g., left or upper neighboring reference samples of the second sub-partition) may be used as neighboring reference samples for the second sub-partition. Similarly, prediction samples for the second sub-partition and residual samples may be derived, and reconstructed samples for the second sub-partition may be derived based on the same. In this case, when deriving prediction samples for the third sub-partition, some of the reconstructed samples in the second sub-partition (e.g., left or upper neighboring reference samples of the third sub-partition) may be used as neighboring reference samples for the third sub-partition.

## Overview of Decoder-side intra mode derivation (DIMD)

DIMD mode may be derived and used in an encoder and decoder without directly transmitting the intra prediction mode information. First, horizontal gradient and vertical gradient are obtained from the second adjacent sample column and row, and HoG (Histogram of gradients) may be constructed from them.

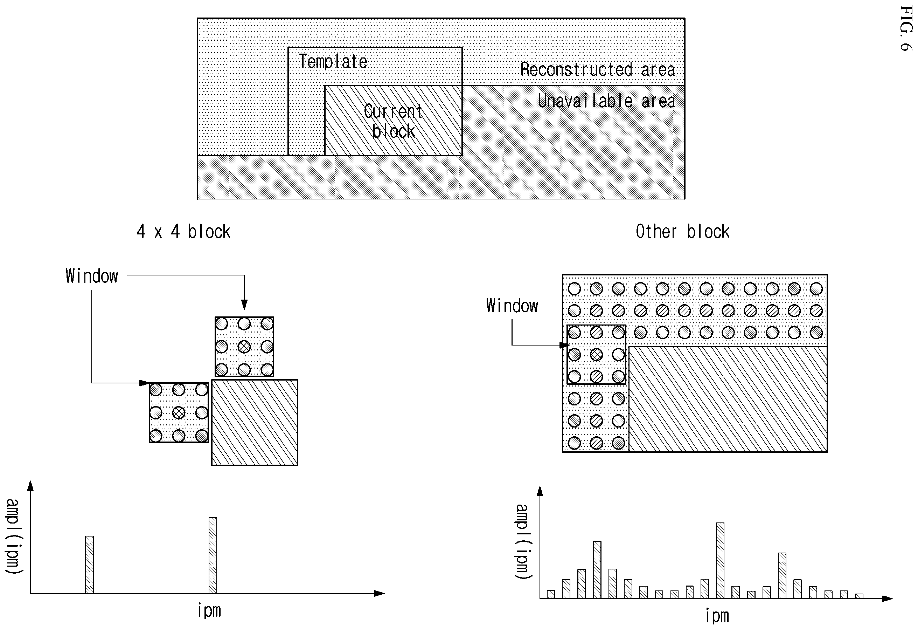

HoG may be constructed as shown in FIG. 6. HoG may be obtained by applying a Sobel filter using L-shaped rows and columns of 3 pixels around a current block. If the boundaries of the blocks are present in different CTUs, they are not used for texture analysis.

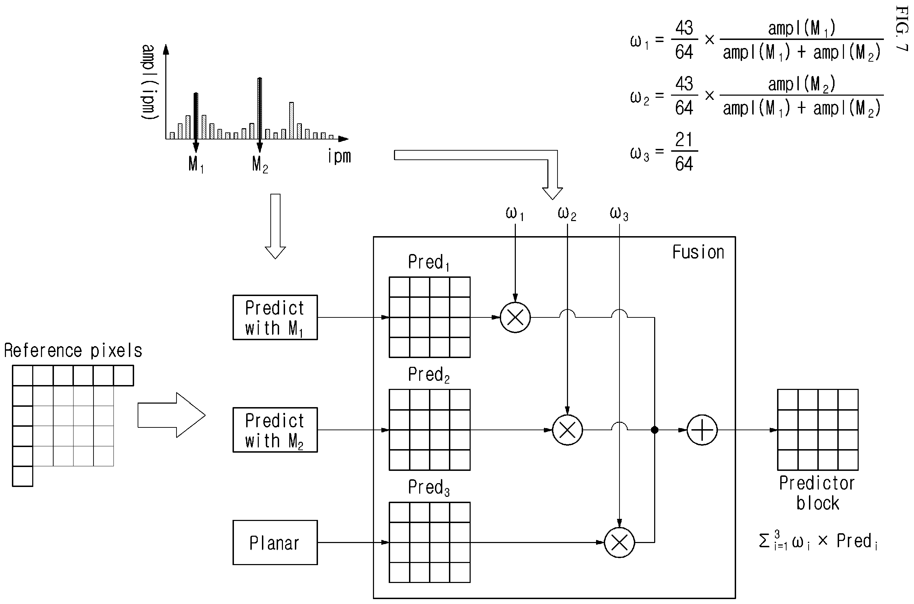

Thereafter, as shown in FIG. 7, two intra modes with the largest histogram amplitudes are selected, and a prediction block predicted using these modes and a planar mode are blended to construct a final predicted block. At this time, a weight for the blending may be derived from the amplitude of the histogram. In addition, a DIMD flag is transmitted in block units to check whether DIMD is used.

Meanwhile, in the case of the ISP mode described above, intra prediction is performed individually for each sub-block of the current block, but the intra prediction mode is applied equally to all sub-blocks of the current block. However, since image characteristics or pixel value changes may differ between sub-blocks, applying the same intra prediction mode to all sub-blocks acts as a factor that reduces prediction accuracy. Accordingly, the embodiments of the present disclosure propose a method of deriving an intra prediction mode for each sub-block in the ISP mode, and a method of generating a prediction signal based on the derived intra prediction mode. Hereinafter, the embodiments of the present disclosure will be described in detail with reference to the attached drawings.

**Embodiment 1**

According to Embodiment 1, when a current CU is partitioned into subblocks due to an ISP mode, each subblock may use various prediction modes by deriving an intra prediction mode for each subblock based on the reconstructed neighboring pixel values of the current block.

Specifically, when a prediction block MxN is in an ISP mode of the present disclosure, the prediction block may be partitioned into $N_A$ (=integer greater than or equal to 2) subblocks. At this time, more accurate prediction may be performed by utilizing the reconstructed neighboring pixel values for each subblock.

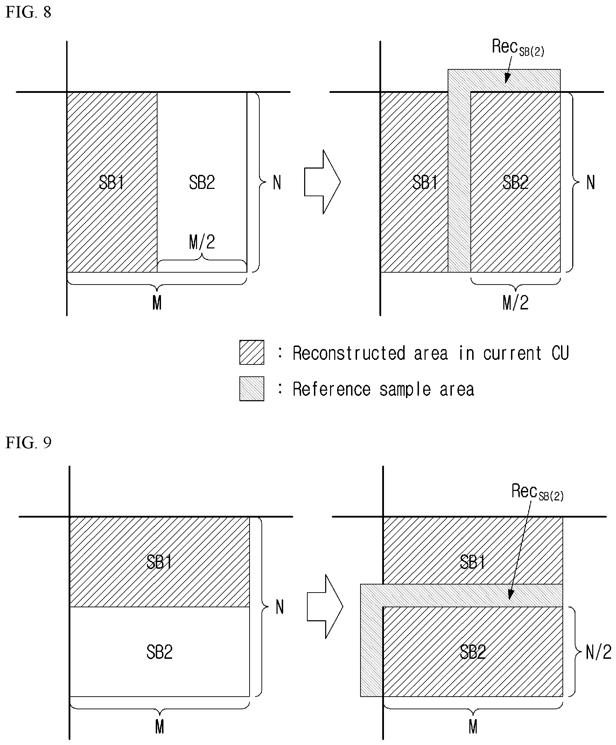

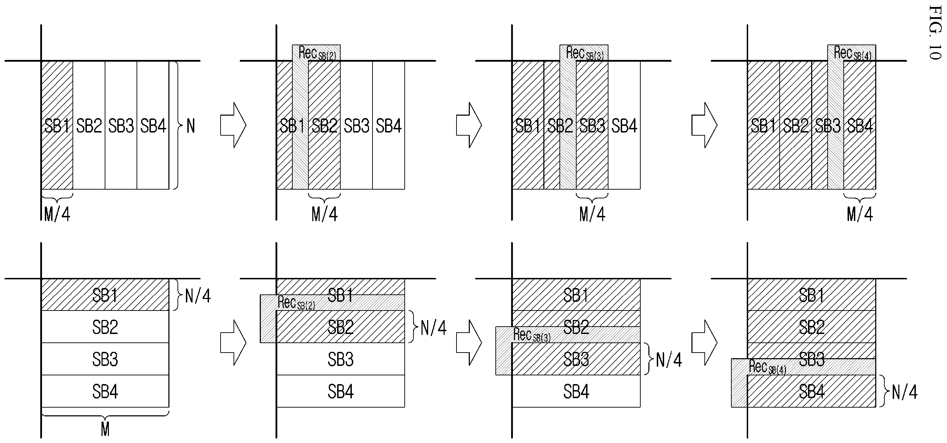

FIG. 8 shows an example for the case of vertical 2-split mode in the ISP mode of the present disclosure. Referring to FIG. 8, for a first sub-block SB1, an intra prediction mode parsed from a bitstream may be used. In contrast, for a second sub-block SB2, an intra prediction mode may be derived using a reconstructed neighboring pixel $R_{ecSB(2)}$, and a different prediction mode from the first sub-block SB1 may be used without additional signaling. An example for the case of horizontal 2-split mode in the ISP mode of the present disclosure is as shown in FIG. 9, and an example for the case of horizontal or vertical 4-split mode is as shown in FIG. 10.

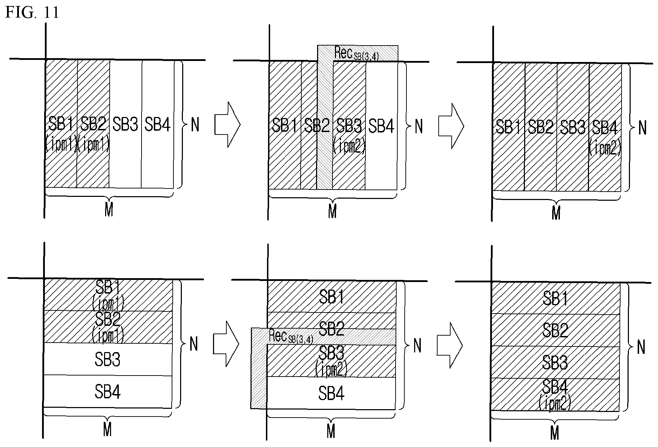

In one embodiment, when the ISP 4-split mode is applied to an MxN prediction block, instead of deriving an intra prediction mode from all subblocks, as in the example of FIG. 11, a first intra prediction mode ipm1 may be used for (SB1, SB2) and a second intra prediction mode ipm2 derived from the reconstructed neighboring pixel area $R_{ecSB(3,4)}$ may be used for (SB3, SB4). Here, the first intra prediction mode ipm1 means the intra prediction mode parsed from the bitstream, and the second intra prediction mode ipm2 means the prediction mode derived from the reconstructed neighboring reference samples of the third subblock SB3 and the fourth subblock SB4.

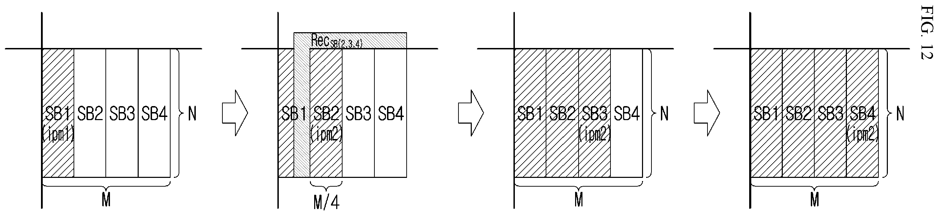

In one embodiment, instead of deriving the intra prediction mode from all subblocks of the ISP, as in the example of FIG. 12, a first intra prediction mode ipm1 may be used for a first subblock SB1, and a second intra prediction mode ipm2 derived from the commonly reconstructed neighboring pixel area $R_{ecSB(2,3,4)}$ may be used for (SB2, SB3, SB4).

As described above, in Embodiment 1 described above, a Histogram of Gradient (HoG) may be utilized as a method of deriving an intra prediction mode of each subblock, and a DIMD (Decoder-side Intra Mode Derivation) technique utilizing this or a TIMD (Templated based Intra Mode Derivation) technique for deriving a template-based intra prediction mode may be used.

**Embodiment 2**

According to Embodiment 2, in the ISP mode of the present disclosure, different intra prediction modes of sub-blocks may be blended. For example, an intra prediction mode parsed from a bitstream and an intra prediction mode derived from reconstructed neighboring reference samples for each sub-block may be blended.

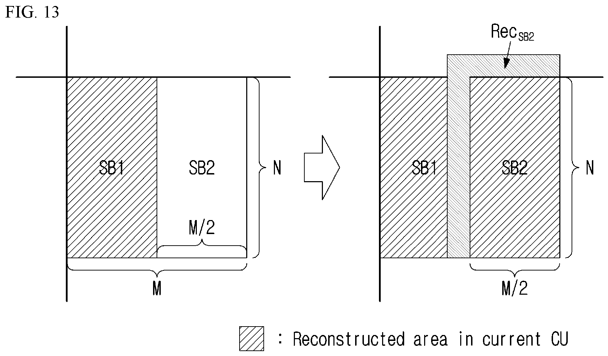

FIG. 13 shows an example in which a first intra prediction mode ipm1 and a second intra prediction mode ipm2 may be used together for a second subblock SB2, assuming that the first intra prediction mode ipm1 parsed from a bitstream is used for a first subblock SB1, and the second intra prediction mode ipm2 derived from the reconstructed neighboring reference samples of the corresponding block is used for the second sub-block SB2.

In addition, the prediction signals of the k(=1, 2, ..., NA)-th sub-blocks may be blended to generate a prediction signal as in the case below.

**- (Case 1): Blending of two signals**

The blending of the prediction signal PredA and the prediction signal PredB may be derived as in Equation 3 below.

[Equation 3]

$$\mathrm{Pred}_{\mathrm{SB(k)}} = w \times \mathrm{PredA} + (1-w) \times \mathrm{PredB}\ (k = 1, \quad 2, ..., N_A)$$

In Equation 3 above, w is a weight value required for blending PredA and PredB, $Pred_{SB(k)}$ is a final prediction signal of a subblock generated through blending, and k is a natural number greater than or equal to 2 and may mean the k-th subblock in the current block.

Various blending combinations may be used to generate a prediction signal of a subblock. According to an embodiment, (PredA, PredB) may include (($Pred_{SB(k)\_ipm1}$, $Pred_{SB(k)\_first}$), ($Pred_{SB(k)\_ipm1}$, $Pred_{SB(k)\_second}$) and ($Pred_{SB(k)\_first}$, $Pred_{SB(k)\_second}$). Here, $Pred_{SB(k)}$ denotes a final prediction signal of the k-th subblock, $Pred_{SB(k)\_first}$ denotes a prediction signal predicted in the first intra prediction mode derived from $Rec_{SB(k)}$, which is a neighboring reference sample of the k-th subblock, $Pred_{SB(k)\_second}$ denotes a prediction signal predicted in the second intra prediction mode derived from $Rec_{SB(k)}$, which is a neighboring reference sample of the k-th subblock, and $Pred_{SB(k)\_ipm1}$ may denote a prediction signal predicted in the first intra prediction mode ipm1 parsed from the bitstream for the k-th subblock.

In one embodiment, by setting w=1/2, the final prediction signal of the k-th subblock may be generated with an equal weight between $Pred_{SB(k)\_ipm1}$ and $Pred_{SB(k)\_first}$, as in Equation 4 below.

[Equation 4]

$$Pred_{SB(k)} = \frac{1}{2}\left(Pred_{SB(k)\_ipm1} + Pred_{SB(k)\_first}\right) (k = 1, \quad 2, ..., N_A)$$

In one embodiment, when ipm1 and ipm2_first are in the same mode, by setting w=1/2, the final prediction signal of the k-th subblock may be generated with equal weights between $Pred_{SB(k)\_ipm1}$ and $Pred_{SB(k)\_second}$ as in Equation 5 below.

[Equation 5]

$$Pred_{SB(k)} = \frac{1}{2}\left(Pred_{SB(k)\_ipm1} + Pred_{SB(k)\_second}\right) (k = 1, \quad 2, ..., N_A)$$

In one embodiment, the final prediction signal may be generated by blending $Pred_{SB(k)\_first}$ and $Pred_{SB(k)\_second}$ as shown in Equation 6 below. In this case, different weights may be applied to $Pred_{SB(k)\_first}$ and $Pred_{SB(k)\_second}$ by using the magnitude of the gradient obtained from the neighboring reference area $Rec_{SB(k)}$ of the k-th subblock. For example, when the magnitudes of the gradients are $G_{SB(K)\_first}$ and $G_{SB(K)\_second}$, respectively, the final prediction signal may be generated by setting the weight w=$G_{SB(k)\_first}$/($G_{SB(k)\_first}$+$G_{SB(k)\_second}$).

[Equation 6]

$$Pred_{SB(k)} = \frac{G_{SB(k)first}}{G_{SB(k)first} + G_{SB(k)second}} \times Pred_{SB(k)\_first}$$
$$+ \frac{G_{SB(k)second}}{G_{SB(k)first} + G_{SB(k)second}} \times Pred_{SB(k)\_second}$$

As an embodiment of obtaining the gradient direction and magnitude, HoG (Histogram of Gradient) may be used, and the gradient magnitude for the horizontal gradient Gx and the vertical gradient Gy may be used as $|G_x| + |G_y|$ or $\sqrt{G_x^2 + G_y^2}$. Therefore, using the gradient direction and magnitude obtained from $Rec_{SB(k)}$, $G_{SB(k)\_first}$ and $G_{SB(k)\_second}$ having the largest magnitude in a specific direction (or directional mode) may be obtained.

In one embodiment, when ipm1, ipm2_first, and ipm2_second are all in the same mode, the $Pred_{SB(1)}$ prediction signal may be used as the final prediction signal without blending as in Equation 7 below by setting w=1.

[Equation 7]

$$Pred_{SB(k)} = Pred_{SB(1)} (k = 1, \quad 2, ..., N_A)$$

Meanwhile, w may be determined based on the magnitude of the gradient, or may be implicitly predefined between the encoder and decoder. In addition, blending may be applied starting from a subblock with k>1, which may be agreed upon between the encoder and decoder or specified in the bitstream.

In one embodiment, in the case of 2-split subblocks, the use of Equation 6 above may be restricted for the subblock with k>1. In this case, Equation 7 above may be applied, or the use of the ISP mode according to the present disclosure may be restricted.

### - (Case 2): blending of three signals

The blending of prediction signals $Pred_{SB(k)\_ipm1}$, $Pred_{SB(k)\_first}$, and $Pred_{SB(k)\_second}$ may be derived using Equation 8 below.

$$[Equation\ 8]$$

$$Pred_{SB(k)} = p \times Pred_{SB(k)\_ipm1} + (1 - p) \times \left( w \times Pred_{SB(k)\_first} + (1-w) \times Pred_{SB(k)\_second} \right)$$

Here, w is a weight value required for blending between $Pred_{SB(k)\_first}$ and $Pred_{SB(k)\_second}$, p is a weight value between $Pred_{SB(k)\_ipm1}$ and the blended prediction signal $Pred_{SB(k)\_first}$ and $Pred_{SB(k)\_second}$, and $Pred_{SB(k)}$ may mean the final prediction signal of the k(=1, 2, ..., NA)-th subblock generated through blending.

In one embodiment, when k=3, p=1/3, and w=2/3, the final prediction signal of the third subblock SB3 may be generated as in Equation 9 below with equal weights between $Pred_{SB(k)\_ipm1}$ and $Pred_{SB(k)\_ipm2\_first}$.

$$[Equation\ 9]$$

$$Pred_{SB(3)} = \frac{1}{3} \times Pred_{SB(3)\_ipm1} + \frac{2}{3} \times \left( \frac{2}{3} \times Pred_{SB(3)\_first} + \frac{1}{3} \times Pred_{SB(3)\_second} \right)$$

Meanwhile, w may be determined based on the magnitude of the gradient, or may be implicitly predefined between the encoder and decoder. In addition, blending may be applied starting from a subblocks with k > 1, which may be agreed upon between the encoder and decoder or specified in the bitstream.

### Embodiment 3

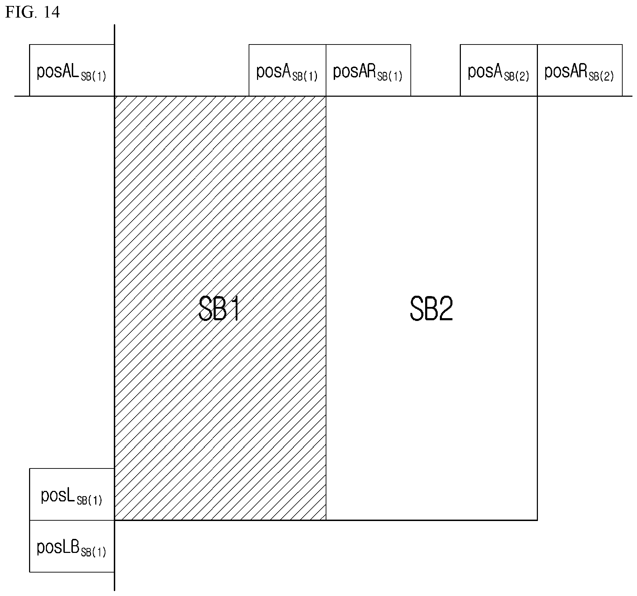

According to Embodiment 3, in the case of the intra prediction mode of the inter slice, various blendings may be performed using the intra prediction mode information of the current block and adjacent blocks. In one embodiment, for the vertically partitioned subblocks, the intra prediction mode stored at the position of the reconstructed PU close to each subblock may be used as in FIG. 14. Each subblock may select and use one of the intra prediction modes that are available (i.e., if the intra prediction mode is stored in the buffer of the reconstructed PU).

In FIG. 14, $Pred_{SB(k)\_ipmRef}$ may mean a signal predicted in the intra prediction mode ipmRef for the k-th subblock. In addition, $ipm_{Ref}$ may mean one available intra prediction mode mong the intra prediction modes stored in the $posAL_{SB(k)}$, $posA_{B(k)}$, $posAR_{SB(k)}$, $posL_{SB(k)}$ and $posLB_{SB(k)}$ positions of the k-th subblock. Here, $posAL_{SB(k)}$ may mean the above-left PU position of the k-th subblock, $posAS_{B(k)}$ may mean the upper PU position of the k-th subblock, $posAR_{SB(k)}$ may mean the above-right PU position of the k-th subblock, $posL_{SB(k)}$ may mean the left PU position of the k-th subblock, and $posLB_{SB(k)}$ may mean the bottom-left PU position of the k-th sub-block. Meanwhile, if the $posAL_{SB(k)}$, $posA_{SB(k)}$, $posAR_{SB(k)}$, $posL_{SB(k)}$ and $posLB_{SB(k)}$ positions are located outside the picture boundary, virtual boundary, CTU/slice/tile area, the positions may not be used. Also, if the intra prediction mode is not stored at the $posAL_{SB(k)}$, $posA_{SB(k)}$, $posAR_{SB(k)}$, $posL_{SB(k)}$ and $posLB_{SB(k)}$ positions, the positions may not be used.

In one embodiment, a candidate list L may be constructed for positions $posAL_{SB(k)}$, $posA_{SB(k)}$, $posAR_{SB(k)}$, $posL_{SB(k)}$ and $posLB_{SB(k)}$, so as to check whether there is an intra prediction mode stored at the corresponding positions. For example, L1={$posAL_{SB(1)}$, $posA_{SB(1)}$, $posAR_{SB(1)}$, $posL_{SB(1)}$ and $posLB_{SB(1)}$} may be constructed for a first subblock SB1, and L2={$posA_{SB(1)}$, $posAR_{SB(1)}$, $posA_{SB(2)}$, $posAR_{SB(2)}$} may be constructed for a second subblock SB2. Meanwhile, the list L may also be defined in advance according to a promise between an encoder and a decoder.

Each subblock may select and use one of the intra prediction modes stored at the candidate positions of the candidate list L. For example, if L2={$posA_{SB(1)}$, $posAR_{SB(1)}$, $posA_{SB(2)}$, $posAR_{SB(2)}$} is constructed for the second sub-block SB2, it is possible to check whether the intra prediction mode is stored in the order of, $posA_{SB(1)} \rightarrow posAR_{SB(1)} \rightarrow posA_{SB(2)} \rightarrow posAR_{SB(2)}$, and the first confirmed available intra prediction mode may be used for blending according to the present disclosure. At this time, it should be understood that the order may be defined in advance according to a promise between the encoder and the decoder.

In one embodiment, a candidate list may be constructed as a method of constructing an MPM for each CU or each sub-block. At this time, if the list is not filled with all candidates, a predefined intra prediction mode may be filled in the list according to the promise between the encoder and the decoder. Then, it may be coded as one of the MPM modes for each CU or each sub-block.

The blending according to Embodiment 3 may be applied as follows.

If the ipm mode stored at the reconstructed PU position in each subblock is available, i) the prediction signal combination ($Pred_{SB(k)\_ipmRef}$, $Pred_{SB(k)\_first}$), ($Pred_{SB(k)\_ipmRef}$, $Pred_{SB(k)\_first}$) and ($Pred_{SB(k)\_ipm1}$, $Pred_{SB(k)\_second}$) may be applied to Equation of the two-signal blending described above with reference to Embodiment 2. Alternatively, ii) the prediction signal combination ($Pred_{SB(k)\_ipmRef}$, $Pred_{SB(k)\_first}$, $Pred_{SB(k)\_second}$) may be applied to Equation of the three-signal blending described above with reference to Embodiment 2.

In contrast, if the ipm mode stored at the reconstructed PU position in each subblock is not available, the blending method described above with reference to Embodiment 2 may be equally applied.

## Embodiment 4

According to Embodiment 4, syntax for supporting the above-described embodiment may be provided.

Examples of Coding_unit syntax according to one embodiment are as shown in Table 5 and Table 6.

[Table 5]

| Coding_Unit(...){ | Descriptor |
| --- | --- |
| ... | |
| intra_subpartitions_mode_flag | ae(v) |
| if( intra_subpartitions_mode_flag == 1 ) | |
| intra_subpartitions_split_flag | ae(v) |
| **intra_subpartitions_blending_flag** | ae(v) |
| ... | |
| } | |

[Table 6]

| Coding_Unit(...){ | Descriptor |
| --- | --- |
| ... | |
| intra_subpartitions_mode_flag | ae(v) |
| if( intra_subpartitions_mode_flag == 1 ) | |
| **intra_subpartitions_blending_flag** | ae(v) |
| intra_subpartitions_split_flag | ae(v) |
| ... | |
| } | |

Whether to blend or not may be determined by a separate flag. For example, as shown in Table 5, after determining whether to split horizontally/vertically (intra_subpartitions_split_flag), intra_subpartitions_blending_flag may be parsed to determine whether to blend or not. Alternatively, as shown in Table 6, if it is determined that the ISP mode of the present disclosure is applied, intra_subpartitions_blending_flag may be parsed to determine whether to blend or not before determining whether to split horizontally/vertically (intra_subpartitions_split_flag).

Unlike the examples in Table 5 and Table 6, the flag for determining whether to blend may not be transmitted. In this case, whether to blend or not may be determined in advance according to a promise between the encoder and the decoder.

In one embodiment, if whether to blend or not may be known through flag parsing or implicitly, the blending combinations (e.g., (e.g., ($Pred_{SB(k)\_ipm1}$, $Pred_{SB(k)\_first}$), ($Pred_{SB(k)\_ipm1}$, $Pred_{SB(k)\_second}$), ($Pred_{SB(k)\_first}$, $Pred_{SB(k)\_second}$), ($Pred_{SB(k)\_ipm1}$, $Pred_{SB(k)\_first}$, $Pred_{SB(k)\_second}$) for generating the final prediction signal of the second subblock SB2 may be determined in advance by a promise between the encoder and the decoder.

In one embodiment, whether to parse the blending flag (i.e., intra_subpartitions_blending_flag) may be determined based on the number of available reference samples of $REC_{SB(k)}$. For example, if the number of available pixels of $REC_{SB(k)}$ is not sufficient to obtain the gradient, parsing of the blending flag may be omitted.

## Embodiment 5

According to Embodiment 5, various reconstructed reference sample areas used to derive the intra prediction mode of the kth subblock may be defined. Here, k may be less than or equal to $N_A$ (an integer greater than or equal to 2).

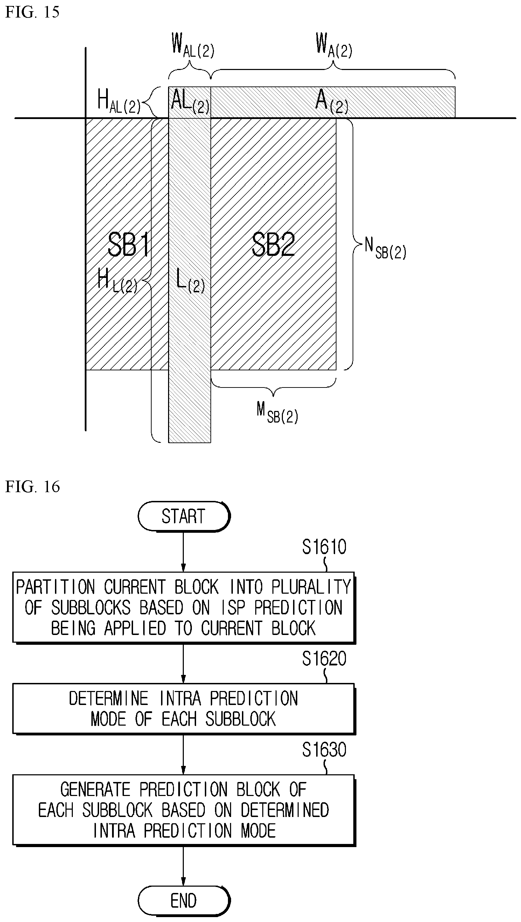

FIG. 15 shows available reconstructed reference sample areas of a second subblock SB2 according to one embodiment. Referring to FIG. 15, when the size of the second subblock SB2 is $M_{SB(2)} \times N_{SB(2)}$, the available reconstructed areas of the second subblock SB2 may be $A_{(2)}$, $L_{(2)}$ and $AL_{(2)}$. Here, the $A_{(2)}$ area may have a size of, for example, $H_{AL(2)} \times W_{A(2)}$, the $L_{(2)}$ area may have a size of, for example, $H_{L(2)} \times W_{AL(2)}$, and the $AL_{(2)}$ area may have a size of, for example, $H_{AL(2)} \times W_{AL(2)}$.

In one embodiment, $H_{AL(k)}$ and $W_{AL(k)}$ may be equal or different. Also, $W_{A(k)}$ may be less than or greater than $M_{SB(k)}$, or may be equal. Also, $H_{L(k)}$ may be less than or greater than $N_{SB(k)}$, or may be equal.

The areas $A_{(k)}$, $L_{(k)}$ and $AL_{(k)}$ of the k-th subblock may be used in the following combinations.

- $(A_{(k)}, L_{(k)}, AL_{(k)})$, $(A_{(k)}, L_{(k)})$, $(A_{(k)}, AL_{(k)})$, $(L_{(k)}, AL_{(k)})$, $(A_{(k)})$, $(L_{(k)})$, $(AL_{(k)})$
- If the number of available reconstructed pixels in each area is less than a predetermined threshold, the area may not be used, and the threshold may be predefined as a promise between the encoder and the decoder.
- If each area is located outside the picture boundary, virtual boundary, or CTU/slice/tile area, the area may not be used. In addition, if each area is located outside a specific area predefined as a promise between the encoder and the decoder, the area may not be used.

According to the ISP mode according to the embodiments of the present disclosure described above, the intra prediction mode may be individually determined for each subblock. In addition, the intra prediction mode of a subblock may be derived from the reconstructed neighboring reference pixel values adjacent to the corresponding subblock or may be determined based on the available intra prediction mode at a predetermined position. Accordingly, each subblock may be predicted more accurately in the ISP mode.

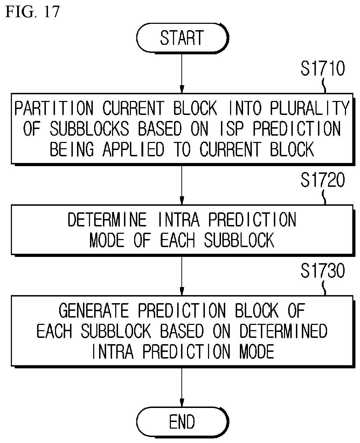

Hereinafter, with reference to FIGS. 16 and 17, an image encoding/decoding method according to an embodiment of the present disclosure will be described in detail.

FIG. 16 is a flowchart illustrating an image encoding method according to an embodiment of the present disclosure. The image encoding method of FIG. 16 may be performed by the image encoding apparatus of FIG. 2.

Referring to FIG. 16, the image encoding apparatus may partition a current block into a plurality of subblocks based on the application of ISP (Intra Sub-Partitions) prediction to the current block (S1610). The image encoding apparatus may determine an intra prediction mode of each of the plurality of subblocks (S1620). Then, the image encoding apparatus may generate a prediction block of each of the plurality of subblocks based on the determined intra prediction mode (S1630).

In one embodiment, the plurality of subblocks may include at least one first subblock and at least one second subblock. In this case, only information on an intra prediction mode of the first subblock among the first subblock and the second subblock may be encoded in a bitstream.

In one embodiment, the intra prediction mode of the second subblock may be derived from neighboring reference samples of the second subblock based on decoder-side intra mode derivation (DIMD) or templated based intra mode derivation (TIMD).

In one embodiment, based on a blending mode being applied to the current block, a prediction block of each of the plurality of subblocks may be generated by a weighted sum of the plurality of prediction blocks. In addition, predetermined blending flag information indicating whether the blending mode is applied may be encoded in the bitstream.

FIG. 17 is a flowchart illustrating an image decoding method according to an embodiment of the present disclosure. The image decoding method of FIG. 17 may be performed by the image decoding apparatus of FIG. 3.

Referring to FIG. 17, the image decoding apparatus may partition a current block into a plurality of subblocks based on the application of ISP (Intra Sub-Partitions) prediction to the current block (S1710). The image decoding apparatus may determine an intra prediction mode of each of the plurality of subblocks (S1720). Then, the image decoding apparatus may generate a prediction block of each of the plurality of subblocks based on the determined intra prediction mode (S1730).

In one embodiment, the plurality of subblocks may include a first subblock and a second subblock. In this case, the intra prediction mode of the first subblock may be determined based on prediction mode information of the first subblock or a first neighboring reference sample of the first subblock. Additionally, the intra prediction mode of the second subblock may be determined based on a second neighboring reference sample of the second subblock.

In one embodiment, the intra prediction mode of the second subblock may be derived from the second neighboring reference sample based on decoder-side intra mode derivation (DIMD) or templated based intra mode derivation (TIMD).

In one embodiment, the final prediction block of the second subblock may be generated by a weighted sum of the first prediction block and the second prediction block of the second subblock. In this case, the first prediction block may be generated based on the intra prediction mode of the first subblock, and the second prediction block may be generated based on the intra prediction mode of the second subblock. Meanwhile, the weight applied to the weighted sum may be determined based on a gradient obtained from the second neighboring reference sample based on a Histogram of Gradient (HoG).

In one embodiment, the final prediction block of the 2nd sub-block may be generated by a weighted sum of the first prediction block, the second prediction block, and the third prediction block of the second subblock. In this case, the first prediction block may be generated based on the intra prediction mode of the first subblock, the second prediction block may be generated based on the first intra prediction mode of the second subblock, and the third prediction block may be generated based on the second intra prediction mode of the second subblock.

In this way, based on the blending mode being applied to the current block, the prediction block of each of the plurality of subblocks may be generated by a weighted sum of the plurality of prediction blocks. In this case, whether the blending mode is applied may be determined based on predetermined blending flag information.

In one embodiment, the intra prediction mode of the second subblock may be selected from among the available intra prediction modes mapped to a predetermined position adjacent to the second subblock.

In one embodiment, the neighboring reference sample of the second subblock may be obtained from at least one of the above reference sample area, the left reference sample area, or the above-left reference sample area of the second subblock.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

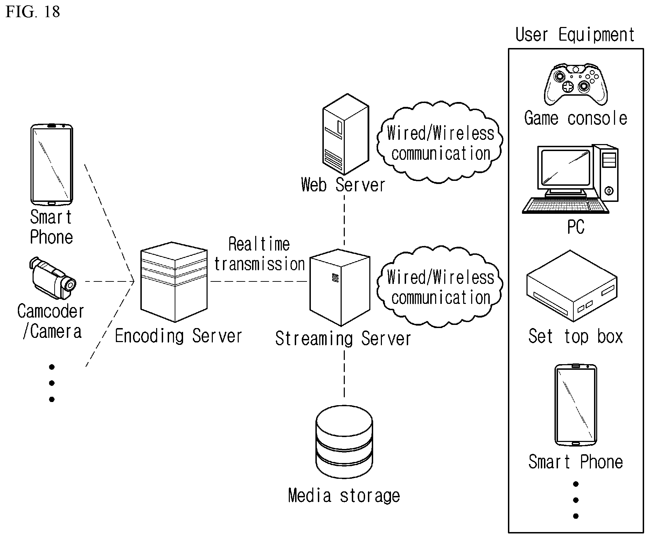

FIG. 18 is a view showing a content streaming system, to which an embodiment of the present disclosure is applicable.

As shown in FIG. 18, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   partitioning a current block into a plurality of subblocks based on intra sub-partitions (ISP) prediction being applied to the current block;
   determining an intra prediction mode of each of the plurality of subblocks; and
   generating a prediction block of each of the plurality of subblocks based on the determined intra prediction mode,
   wherein the plurality of subblocks includes a first subblock and a second subblock,
   wherein an intra prediction mode of the first subblock is determined based on prediction mode information of the first subblock or a first neighboring reference sample of the first subblock, and
   wherein an intra prediction mode of the second subblock is determined based on a second neighboring reference sample of the second subblock.

2. The image decoding method of claim 1, wherein the intra prediction mode of the second subblock is derived from the second neighboring reference sample based on decoder-side intra mode derivation (DIMD) or templated based intra mode derivation (TIMD).

3. The image decoding method of claim 1, wherein a final prediction block of the second subblock is generated by a weighted sum of a first prediction block and a second prediction block of the second subblock.

4. The image decoding method of claim 3, wherein the first prediction block is generated based on the intra prediction mode of the first subblock and the second prediction block is generated based on the intra prediction mode of the second subblock.

5. The image decoding method of claim 3, wherein a weight applied to the weighted sum is determined based on a gradient obtained from the second neighboring reference sample based on a histogram of gradient (HoG).

6. The image decoding method of claim 1, wherein a final prediction block of the second subblock is generated by a weighted sum of a first prediction block, a second prediction block and a third prediction block of the second subblock.

7. The image decoding method of claim 6, wherein the first prediction block is generated based on an intra prediction mode of the first subblock, the second prediction block is generated based on a first intra prediction mode of the second subblock, and the third prediction block is generated based on a second intra prediction mode of the second subblock.

8. The image decoding method of claim 1, wherein the intra prediction mode of the second subblock is selected from among available intra prediction modes mapped to predetermined positions adjacent to the second subblock.

9. The image decoding method of claim 1,

    wherein a prediction block of each of the plurality of subblocks is generated by a weighted sum of the plurality of prediction blocks, based on a blending mode being applied to the current block, and
    wherein whether to apply the blending mode is determined based on predetermined blending flag information.

10. The image decoding method of claim 1, wherein a neighboring reference sample of the second subblock is obtained from at least one of an above reference sample area, a left reference sample area or an above-left reference sample area of the second subblock.

11. An image decoding apparatus comprising a memory and at least one processor,
    wherein the at least one processor is configured to:

    partition a current block into a plurality of subblocks based on intra sub-partitions (ISP) prediction being applied to the current block;
    determine an intra prediction mode of each of the plurality of subblocks; and
    generate a prediction block of each of the plurality of subblocks based on the determined intra prediction mode,
    wherein the plurality of subblocks includes a first subblock and a second subblock,
    wherein an intra prediction mode of the first subblock is determined based on prediction mode information of the first subblock or a first neighboring reference sample of the first subblock, and
    wherein an intra prediction mode of the second subblock is determined based on a second neighboring reference sample of the second subblock.

12. An image encoding method performed by an image encoding apparatus, the image encoding method comprising:

    partitioning a current block into a plurality of subblocks based on intra sub-partitions (ISP) prediction being applied to the current block;
    determining an intra prediction mode of each of the plurality of subblocks; and
    generating a prediction block of each of the plurality of subblocks based on the determined intra prediction mode,
    wherein the plurality of subblocks includes a first subblock and a second subblock, and
    wherein only information on an intra prediction mode of the first subblock among the first subblock and the second subblock is encoded in a bitstream.

13. The image encoding method of claim 12, wherein the intra prediction mode of the second subblock is derived from the second neighboring reference sample based on decoder-side intra mode derivation (DIMD) or templated based intra mode derivation (TIMD).

14. The image encoding method of claim 12,

    wherein a prediction block of each of the plurality of subblocks is generated by a weighted sum of the plurality of prediction blocks, based on a blending mode being applied to the current block, and
    wherein predetermined blending flag information indicating whether to apply the blending mode is encoded in the bitstream.

15. A computer-readable recording medium storing a bitstream generated by an image encoding method, the image encoding method comprising:

    partitioning a current block into a plurality of subblocks based on intra sub-partitions (ISP) prediction being applied to the current block;
    determining an intra prediction mode of each of the plurality of subblocks; and

generating a prediction block of each of the plurality of subblocks based on the determined intra prediction mode,
wherein the plurality of subblocks includes a first subblock and a second subblock, and
wherein only information on an intra prediction mode of the first subblock among the first subblock and the second subblock is encoded in a bitstream.

FIG. 1

FIG. 2

FIG. 3

FIG. 4

FIG. 5A

FIG. 5B

Original HxW partition

Horizontal

Vertical

W

H/4

W/4

H

FIG. 6

FIG. 7

$$\omega_1 = \frac{43}{64} \times \frac{ampl(M_1)}{ampl(M_1) + ampl(M_2)}$$

$$\omega_2 = \frac{43}{64} \times \frac{ampl(M_2)}{ampl(M_1) + ampl(M_2)}$$

$$\omega_3 = \frac{21}{64}$$

FIG. 8

| | : Reconstructed area in current CU |
| :-- | :-- |
| | : Reference sample area |

FIG. 9

FIG. 10

EP 4 550 779 A1

FIG. 11

FIG. 12

FIG. 13

: Reconstructed area in current CU

FIG. 14

posAL$_{SB(1)}$

posA$_{SB(1)}$　posAR$_{SB(1)}$

posA$_{SB(2)}$　posAR$_{SB(2)}$

SB1

SB2

posL$_{SB(1)}$

posLB$_{SB(1)}$

FIG. 15

FIG. 16

START

S1610
PARTITION CURRENT BLOCK INTO PLURALITY OF SUBBLOCKS BASED ON ISP PREDICTION BEING APPLIED TO CURRENT BLOCK

S1620
DETERMINE INTRA PREDICTION MODE OF EACH SUBBLOCK

S1630
GENERATE PREDICTION BLOCK OF EACH SUBBLOCK BASED ON DETERMINED INTRA PREDICTION MODE

END

FIG. 17

```
           ( START )
                |
                |                        S1710
                v
   ┌──────────────────────────────────┐
   │ PARTITION CURRENT BLOCK INTO PLURALITY│
   │  OF SUBBLOCKS BASED ON ISP PREDICTION │
   │    BEING APPLIED TO CURRENT BLOCK    │
   └──────────────────────────────────┘
                |
                |                        S1720
                v
   ┌──────────────────────────────────┐
   │      DETERMINE INTRA PREDICTION      │
   │         MODE OF EACH SUBBLOCK        │
   └──────────────────────────────────┘
                |
                |                        S1730
                v
   ┌──────────────────────────────────┐
   │     GENERATE PREDICTION BLOCK OF     │
   │  EACH SUBBLOCK BASED ON DETERMINED   │
   │        INTRA PREDICTION MODE         │
   └──────────────────────────────────┘
                |
                v
            ( END )
```

FIG. 18

## INTERNATIONAL SEARCH REPORT

| | International application No. |
|---|---|
| | **PCT/KR2023/009054** |

**A. CLASSIFICATION OF SUBJECT MATTER**

**H04N 19/11**(2014.01)i; **H04N 19/593**(2014.01)i; **H04N 19/70**(2014.01)i; **H04N 19/13**(2014.01)i; **H04N 19/105**(2014.01)i; **H04N 19/60**(2014.01)i; **H04N 19/30**(2014.01)i; **H04N 19/132**(2014.01)i

According to International Patent Classification (IPC) or to both national classification and IPC

**B. FIELDS SEARCHED**

Minimum documentation searched (classification system followed by classification symbols)

H04N 19/11(2014.01); H04N 19/119(2014.01); H04N 19/159(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: ISP(Intra Sub-Partitions), 화면 내(intra), 예측(prediction), 모드(mode), 서브블록 (subblock), 주변(neighbor)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0107871 A (JUNG, Byung Deuk) 16 September 2020 (2020-09-16)<br>See paragraphs [0010], [0048], [0082] and [0148]; claims 1 and 5; and figure 1. | 1,8,10-12,14-15 |
| Y | | 2-7,9,13 |
| Y | KR 10-2019-0056332 A (ELECTRONICS AND TELECOMMUNICATIONS RESEARCH INSTITUTE) 24 May 2019 (2019-05-24)<br>See paragraph [0487]. | 2-7,9,13 |
| Y | US 2019-0281290 A1 (ELECTRONICS AND TELECOMMUNICATIONS RESEARCH INSTITUTE et al.) 12 September 2019 (2019-09-12)<br>See paragraphs [0733]-[0734]. | 5 |
| A | KR 10-2022-0051340 A (BEIJING BYTEDANCE NETWORK TECHNOLOGY CO., LTD. et al.) 26 April 2022 (2022-04-26)<br>See paragraphs [0006]-[0021]; and claims 1-6. | 1-15 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 September 2023** | **25 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/009054** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0128020 A (FRAUNHOFER-GESELLSCHAFT ZUR FÖRDERUNG DER ANGEWANDTEN FORSCHUNG E. V.) 11 November 2020 (2020-11-11)<br>    See paragraph [0006]; and claims 1-32. | 1-15 |

Form PCT/ISA/210 (second sheet) (July 2022)

INTERNATIONAL SEARCH REPORT
Information on patent family members

International application No.

**PCT/KR2023/009054**

| Patent document cited in search report | | | Publication date (day/month/year) | Patent family member(s) | | | Publication date (day/month/year) |
|---|---|---|---|---|---|---|---|
| KR | 10-2020-0107871 | A | 16 September 2020 | WO | 2020-184936 | A1 | 17 September 2020 |
| KR | 10-2019-0056332 | A | 24 May 2019 | CN | 111373755 | A | 03 July 2020 |
| | | | | US | 11350107 | B2 | 31 May 2022 |
| | | | | US | 2020-0366900 | A1 | 19 November 2020 |
| | | | | US | 2022-0272357 | A1 | 25 August 2022 |
| | | | | WO | 2019-098758 | A1 | 23 May 2019 |
| US | 2019-0281290 | A1 | 12 September 2019 | KR | 10-2019-0107581 | A | 20 September 2019 |
| | | | | US | 10771781 | B2 | 08 September 2020 |
| | | | | US | 11363260 | B2 | 14 June 2022 |
| | | | | US | 2021-0021816 | A1 | 21 January 2021 |
| | | | | US | 2022-0303528 | A1 | 22 September 2022 |
| KR | 10-2022-0051340 | A | 26 April 2022 | CN | 114303383 | A | 08 April 2022 |
| | | | | JP | 2022-546395 | A | 04 November 2022 |
| | | | | US | 2022-0191490 | A1 | 16 June 2022 |
| | | | | WO | 2021-037258 | A1 | 04 March 2021 |
| KR | 10-2020-0128020 | A | 11 November 2020 | CN | 111971959 | A | 20 November 2020 |
| | | | | EP | 3750306 | A1 | 16 December 2020 |
| | | | | JP | 2021-513296 | A | 20 May 2021 |
| | | | | JP | 2023-022221 | A | 14 February 2023 |
| | | | | JP | 7187566 | B2 | 12 December 2022 |
| | | | | KR | 10-2023-0030054 | A | 03 March 2023 |
| | | | | TW | 201941604 | A | 16 October 2019 |
| | | | | TW | 202249485 | A | 16 December 2022 |
| | | | | TW | I767105 | B | 11 June 2022 |
| | | | | US | 2020-0366895 | A1 | 19 November 2020 |
| | | | | WO | 2019-154936 | A1 | 15 August 2019 |

Form PCT/ISA/210 (patent family annex) (July 2022)